# EUROPEAN PATENT SPECIFICATION

(11) **EP 0 593 592 B1**
(45) Date of publication and mention of the grant of the patent: **25.03.1998**
(21) Application number: 92914623.1
(22) Date of filing: 07.07.1992
(51) Int. Cl.: C08G 81/00, C08G 63/60, C09K 19/38

(54) **THERMOTROPIC LIQUID CRYSTAL SEGMENTED BLOCK COPOLYMER**
THERMOTROPES FLÜSSIG-KRISTALLINES SEGMENT-BLOCKCOPOLYMER
COPOLYMERE EN MASSE SEGMENTEE A CRISTAUX LIQUIDES THERMOTROPIQUES

(30) Priority: 08.07.1991 US 726601
(43) Date of publication of application: 27.04.1994
(73) Proprietor: THE UNIVERSITY OF MASSACHUSETTS AT AMHERST, Amherst, MA 01003 (US)
(72) Inventor: KANTOR, Simon, W., Agawam, MA 01001 (US); LENZ, Robert, W., Amherst, MA 01002 (US); LU, Caixia, Northampton, MA 01060 (US)
(74) Representative: Schalkwijk, Pieter Cornelis
(86) International application number: US9205671
(87) International publication number: WO9301227

(56) References cited:
- US-A- 4 228 218
- US-A- 4 792 587
- "Faraday Discussions of the Chemical Society", vol. 79, "Polymer Liquid Crystals", London, The Royal Society of Chemistry, 1985, pp 21-32
- Polymer Engineering and Science, January 1990, BOO YOUNG SHIN, "Speculation on Interfacial Adhesion and Mechanical Properties of Blends of PET and Thermotropic Polyester with Flexible Spacer Groups", pages 13-21, see entire document.

## Description

### BACKGROUND OF THE INVENTION

Using main chain thermotropic liquid crystal polymers (LCPs) as one of the components in polymeric blends can lead to very interesting systems. When processed in the mesophase state, LCPs generally provide many advantages over random coil polymers because most LCPs have an intrinsically low melt viscosity in the nematic melt and a tendency toward easy orientation in the flow direction. Furthermore, it is well known that oriented LCPs relax very slowly and therefore the orientation developed in a processed melt may be retained after solidification. Under controlled processing conditions droplets of the LC phase can be induced to form elongated or even fibrillar domains in which the molecular chains are highly aligned yielding self-reinforcement.

Blends of a thermotropic liquid crystalline polymer (TLCP) with a flexible coil-like polymer may achieve the characteristics of TLCP, but at a lower cost. The TLCP, which is initially dispersed as spheres or droplets in the matrix can be elongated in adequate flow-fields to give reinforcement. Recent work in the literature has described blends of a TLCP with coil-like polymers including poly(ethylene terephthalate), poly(butylene terephthalate), polycarbonate, polyamide and polyethers as matrix materials. Exemplary art considered to be generally relevant to the instant invention, to be described hereinafter, are: Shin et al., Polymer. Eng. and Sci., Vol. 30, No. 1, 13-21, which describes blends of poly(ethylene terephthalate) and a very high molecular weight LCP with a long flexible spacer, and M. Pracella, Makromol. Chem. 187, 2387-2400, which shows blends of poly(butylene terephthalate) with a polymer containing a triad aromatic ester mesogenic unit containing a decamethylene flexible spacer unit.

Also of interest is the recent review article by D. Dutta et al. in Polymer Engineering and Science, Mid-September 1990, Vol. 30, No. 17, pages 1005-1018 which gives an overview of polymer blends containing liquid crystals. This paper mentions, on pages 1008-1009,: work by Joseph et al. in blending poly(ethylene terephthalate) with a liquid crystalline "copolyester" based on 60 mole % parahydroxy benzoic acid (PHB); 40 mole % PET, on work by Misra and coworkers on blends of PET with an LCP copolymer of PET and PHB; and the general work (footnotes 47-68) which relates to the miscibility behavior of blends containing an LCP including work involving liquid crystalline copolyesters of PET and PHB with other, flexible-chain polymers. All of this work has involved use of a LC copolymer additive which was essentially random in nature.

The orientation of the TLCP and the degree of interfacial adherence between TLCP and matrix are both important factors for the strength of such a blend composite material. A major difficulty in such TLCP blend systems derives from the techniques of dispersing the rigid-rod molecules in the matrix of flexible coil molecules. If the interfacial interaction force between the TLCP and matrix is strong enough, the dispersion can proceed until the interfacial energy is balanced with the aggregation energy of rigid molecules.

The most promising way to get good dispersion would be to prepare block or graft copolymers which contain both rigid and flexible moieties. The flexible blocks which are attached to the rigid blocks can increase the entropy of mixing to result in uniform dispersion and good adhesion of the rigid blocks in a flexible polymer matrix, (when the aggregation energy of rigid blocks is correspondingly low). Takayanagi, et. al. in J. Macromol. Sci.-Phys., B17, 591 (1980) and Pure Appl. Chem. 55, 819 (1983), have reported that block/matrix blends such as poly(p-phenylene terephthalamide)/nylon and poly(p-benzamide)/nylon block copolymers blended into a nylon matrix showed improved properties over the normal blends with equivalent rod-like polymer loading.

Thus, block copolymers of rigid and flexible polymers are considered by the present inventors to have great potential in self-reinforced composites. In such copolymer systems, however, dilute solutions must be employed in order to obtain good dispersion because the rod-like molecules aggregate above a certain critical concentration. A TLCP in-situ composite LCP systems, but would have the advantages of melt processability and well dispersed mixing.

### DESCRIPTION OF THE INVENTION

The present invention relates to a novel liquid crystal block, as contrasted to random, copolymer comprising segmented mesogenic and segmented flexible coil blocks. The segmented flexible coil blocks are preferably substantially similar to the flexible coil polymer of the matrix if the novel block copolymer claimed herein is intended to be blended with a flexible coil polymer matrix. It is most preferred, but not necessary, that the segmented flexible coil blocks and the flexible coil polymer of the matrix be substantially identical when the novel block copolymer of the present invention is used for blending with a flexible coil polymer matrix.

The present invention, in a more narrow but preferred embodiment, relates to a novel segmented block copolymer af a liquid polymer containing a triad aromatic ester mesogen unit with flexible polyalkylene spacer adn a polyester, such as PBT as the flexible coil.

The liquid crystalline segmented block copolymer which can be added to a selected flexible coil polymer matrix can be envisioned to have the general formula:

-[[Rod]ₓ-[Coil]_{y}]ₚ-

where "Rod" indicates the mesogenic block with x, normally from 2 to 50, indicating the number of mesogen repeats, "Coil" indicating the block comprising the flexible coil polymer, with y, normally from 2 to 50, indicating the number of repeat units of the flexible coil polymer, and p representing the repeat units of "Rod" and "Coil" blocks. The mole % rod in the total polymer can range from about 4% to about 80%. The repeat unit p can range from about 1 to very large numbers such as 50-500 for high molecular weight segmented block copolymers.

The rod length, which is responsible for liquid crystalline properties for the instant block copolymer, and the % block in the matrix/block copolymer combination, if desired, need to be appropriately balanced within the general ranges given above so that there is liquid crystalline properties imparted to the additive so that appropriate phase separation, with creation of domains of rod and coil, is created with a concomitant reinforcement of the entire blend.

The flexible coil polymer matrix for blend applications can be selected from known polyester and polyamide polymers such as poly(ethylene terephthalate), poly(butylene terephthalate) nylon-6,6, nylon 6, amorphous nylons, and polyester thermoplastic elastomers based on PBT and polytetramethylene oxide units.

The type of mesogenic unit for the rod portion of the LC copolymer can be appropriately selected from known mesogenic units (main chain thermotropic liquid crystal polymers) including those of the general structure:

[-A-Y-X-Z-]ₓ (I)

as set forth in U.S. Patent No. 4,952,334, for example. In the above formula, for example, in preferred embodiments, X can be (CH₂)ₙ, where n is an integer of from 2 to 10, m can range from 2 to 50, and Y and Z can each be -C(O)O- or -C(O)NH- or can be a single bond between two carbon atoms, and A can be p-phenylene, 1,4-, 2,6-, or 1,5-naphthylene, monosubstituted phenylene with methyl, chloro, or phenyl substitution; -ArCH=CHAr-, where Ar is a phenyl ring, -AR-C(O)OAr-, -Ar-C(O)NHAr-, or -ArOC(O)-Ar-C(O)O-Ar-, as more fully depicted in the aforementioned patent. In addition, another mesogenic unit which can be employed has the structure -Ar-C(O)-NH-Ar-NH-C(O)-Ar-. The commercial rod polymers based on oxybenzoate units, 4,4'-biphenylene terephthalate units, and oxynaphthalene carboxylate units (the latter two including copolymers with the oxybenzoate units) can be especially preferred.

The flexible coil block in the block copolymer segment described above should be substantially similar to the matrix material, when a blend utility is desired for the instant block copolymer, by being either substantially the same in regard to the repeat units of the matrix or by having some of the same repeat units. Thus, if a PET matrix is chosen a PET block segment in the copolymer would be selected.

The description which is given below should illustrate the more general, novel utility just described with selection of a rod based on the triad-type, with flexible spacer, shown in Ober et al., Polymer J. 14, 9 (1982). However, it is to be understood that the present invention is not to be so limited since the novel block copolymer can be used neat with the flexible coil blocks conferring better processability on the copolymer as compared to an LCP containing the rod segment.

Although the particular thermotropic LCP block (triad with flexible spacer block and polyester block) of structure (I), above, is not a true rigid-rod, it readily assumes an extended chain structure and forms nematic mesophases and consequently high modulus/strength structures. Ideally, the high strength chain extended block polymer molecules would be very finely dispersed in a PBT matrix in blend applications and would be expected to have potential as a high performance molecular composite material.

The LCP segmented block copolymer (triad mesogenic unit with flexible spacer and polyester segment) can be advantageously prepared in a two step-reaction sequence. In the first step, low oligomers of the triad oligomer can be prepared by the following reaction:

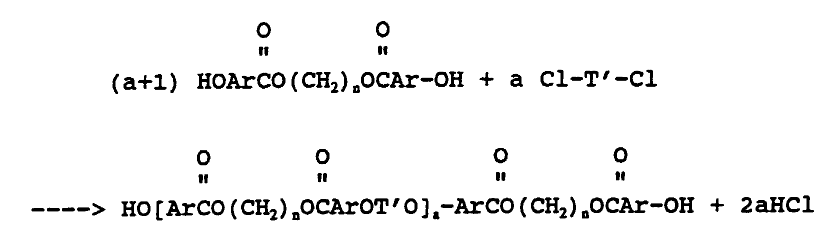

In the above formula (as well as those below), Ar is paraphenylene, a can be 2-50, b can be 2-50, n is the length of the spacer, e.g., 2-10, 2 or 4 most preferably, and T' is (para)-OCArCO-.

Also in the first step, low oligomers of the polyester (e.g., preferably either ethylene terephthalate or butylene terephthalate) can be prepared by the following reaction:

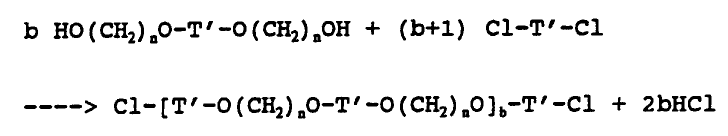

The end-groups of the triad oligomer and the polyester oligomers can be selected as either acyl chloride or hydroxyl, respectively (or the converse), depending on the chosen preselected stoichiometry.

For example, preparation of the triad oligomer with hydroxyl end-groups necessitates the preparation of the polyester oligomer with acyl chloride end-groups, and vice versa.

In the second step, the oligomers can be allowed to react with each other to produce the desired block copolymer according to the following sequence:

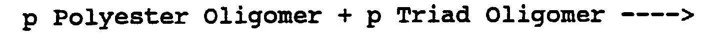

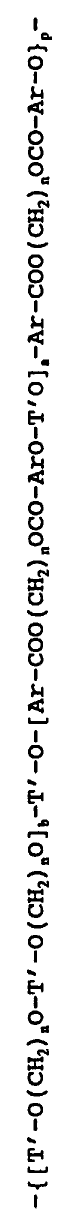

Alternatively, the same block copolymer may be prepared from acyl chloride end-groups on the triad oligomer and hydroxyl end-groups on the polyester oligomer in the two step sequence shown below:
Step 1: 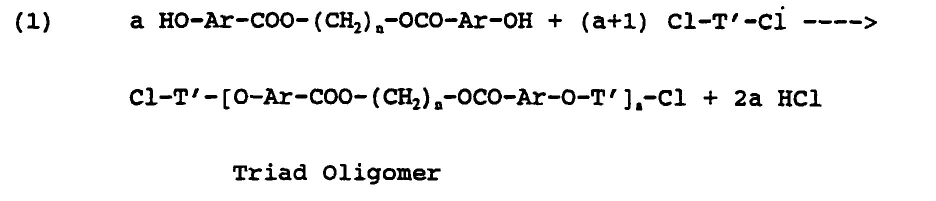 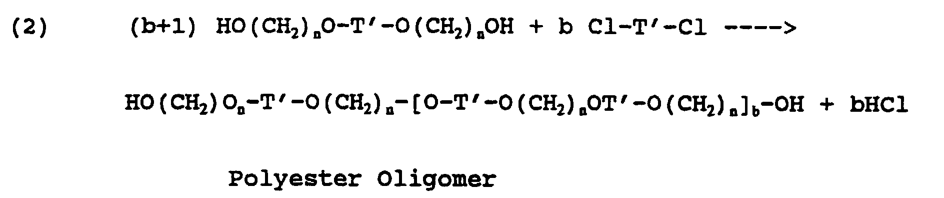
Step 2:

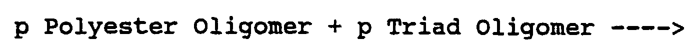

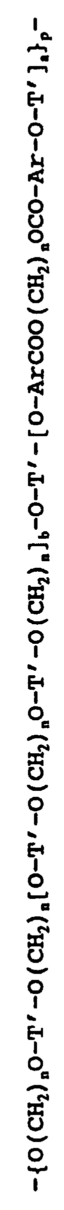

Thus, by controlling the sizes of the oligomers, both the length of the blocks and the composition of the copolymer may be controlled. The sizes of the oligomers can be controlled by the stoichiometric ratios of the triad monomer to terephthaloyl chloride and bis(hydroxyalkyl)terephthalate to terephthaloyl chloride. Polarized optical microscopy (POM) results have shown that these block copolymers form nematic liquid crystal phases above Tₘ, as shown by Schlieren textures. DSC analysis of the block polymer, when n = 4 and Ar = phenylene, yields a thermogram with a broad melting transition at, for example, 210°C and a broad isotropic transition at 292°C. When a sample was heated to high temperature (260°C), biphasic behavior (nematic plus isotropic) can be observed by POM. The following Example and related Experimentals section sets forth one preferred material of this type and a process to make it.

### EXAMPLE 1

This Example illustrates preparation of a triad-4 poly(butylene terephthalate) (PBT) copolymer (B) with an average block size of five triad-4 terephthalate and eight butylene terephthalate units in the corresponding blocks. As used in this Example and the discussion which follows, the term "Triad-4" is meant to be a shorthand designation for the triad aromatic ester mesogenic unit shown in Ober et al., Polymer J., Vol. 14, No. 1 (1982) on page 9 where the formula (Series I) has a methylene spacer where n = 4.

Bis-(hydroxybutyl)terephthalate (BHBT) (4.000 gm, 1.2889 x 10⁻² mol) and terephthaloyl chloride (3.271 gm, 1.6111 x 10⁻² mol) were added to a first flask containing a magnetic stirring bar. For the synthesis of BHBT, see Makromol. Chem. 183:301 (1980). Triad-4 monomer (5.322 gm, 1.6111 x 10⁻² mol) and terephthaloyl chloride (2.617 gm, 1.2889 x 10⁻² mol) were added to a second flask containing a magnetic stirring bar. Two portions of 40 mL of dry 2-chloronaphthalene were cannulated into both flasks separately while maintaining an argon atmosphere. Hydrogen chloride was evolved from the first flask even at 20°C. Both flasks were then kept at 200°C under the argon flow for 3.5 hours. The oligomers prepared in both flasks were then mixed together under argon atmosphere and were kept at 245°C for fifty hours to complete the polymerization reaction. A white polymer precipitate was formed when the clear pale yellow polymer solution was cooled. The polymer precipitate was ground to a powder and was added to 1000 mL of methanol. The polymer was collected by vacuum filtration and then extracted in a Soxhlet apparatus with methanol for two days. The polymer was then dried in a vacuum oven at 100°C for twenty-four hours. The yield was 90%, and the inherent viscosity was 0.50 g^{-1.}dL, measured as a 0.50 g^{.}dL⁻¹ trifluoroacetic acid polymer solution at 30°C.

### EXPERIMENTAL

### Materials

The LCP copolymer used was a block polymer made in Example 1, above (hereinafter termed "LCP-b-PBT (5/8)"), which consisted of blocks of a triad aromatic ester mesogenic unit containing an alkylene spacer (C₄ alkylene) of the type described by Lenz et al. in Polym. J., Vol. 14, p. 9 (1982). The chemical structure of the LC block polymers was as shown below:

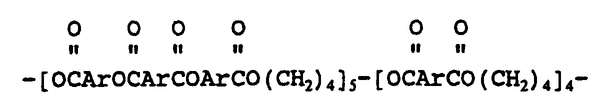

The tetramethylene [(CH₂)₄] groups between the rigid mesogen blocks 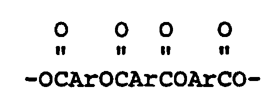 and the PBT block may increase the compatibility and dispersity of the LCP/PBT blend.

The thermal properties and inherent viscosities of LCP-b-PBT and pure PBT are listed in Table 1:

**Table 1**

| Properties of LCP-b-PBT and Poly(butylene terephthalate) | | | | |
|---|---|---|---|---|
| | Tₘ^{a} (°C) | Ti^{b}(°C) | IV^{c} (dl/g) | Mw |
| LCP-b-PBT | 210 | 275 | 0.51 | |
| PBT | 225 | --- | --- | 33,000 |

| | | | | |
|---|---|---|---|---|
| ^{a} Melt transition temperature from DSC thermogram. | | | | |
| ^{b} Isotropic transition temperature obtained at peak of DSC thermogram. | | | | |
| ^{c} Inherent viscosity of solution in CF₃COOH at a concentration of 0.25 g/dl at 25°C. | | | | |

The LCP-b-PBT (5/8) with an inherent viscosity of 0.51 (0.2 g/dL in trifluoroacetic acid) had a melting temperature (Tₘ) of 210°C and an isotropic transition Ti at 275°C. The PBT (Mn : 10,500, Mw/Mn : 3.1) had a melting temperature of 225°C.

In order to further demonstrate one utility for the instant novel block copolymers, blends of LCP-b-PBT with PBT in various compositions were prepared by solution blending. Dilute (less than 5 wt%) solutions of PBT and LCP-b-PBT in trifluoroacetic acid at room temperature were mixed together in appropriate portions and were co-precipitated in methanol, then were washed with 5% NaHCO₃ solution, water and methanol followed by drying at 130°C under vacuum overnight. The concentration of LCP-b-PBT was varied over the range of 5-50 wt%.

The vacuum dried blend and pure component polymer precipitates were combined in a hot-press at 210°C and 2500 kg/cm² for a brief period of time. These irregular films were immediately removed from the press and were quenched in cold water. The blend films dried under vacuum at 130°C for 24 hours were extruded through a die of a capillary rheometer (Instron 3210) with an aspect ratio (d = 0.6 mm) of 40 and shear rate of 114 sec⁻¹ at 245°C and 255°C when the LCP-b-PBT was in the liquid crystalline state. The residence time in the capillary extruder was 2 to 3 minutes.

The extrudate was elongated by a take-up machine below the die. The draw ratio (DR) was determined by measuring the reduction in fiber diameter by either laser diffraction or optical microscopy. It is to be understood that the term "draw ratio" as used herein is to be construed as relating to "drawn as spun", also termed "jet draw" or "jet stretch".

Tensile properties were measured at 10 or 20 mm/min cross-head speed on an Instron Mechanical Tester at ambient conditions in the laboratory. Each tensile property was averaged over six tests.

Morphology was characterized using a JEOL [JSM-35C] scanning electron microscope with an accelerating voltage of 25 kv.

Fracture surfaces were prepared by snapping the materials after cooling in liquid nitrogen. To observe the deformation of dispersed LCP-b-PBT particles in the blend, the strands stretched by the tensile tester were also examined. These samples were mounted on aluminum stubs and sputtered with gold using an SPI Sputter Coater for enhanced conductivity. A Perkin-Elmer model DSC-7 was used for thermal characterization. A heating rate of 20°C/min was utilized, and the samples were scanned from 40°C to 300°C.

### RESULTS AND DISCUSSION

### Microscopy Observations

LCP-b-PBT in the melt showed the nematic behavior characterized by a thread-like texture.

In the heating cycle, the transition from solid crystal to nematic phase was observed around 230°C, while isotropization began at about 275°C. Pure PBT crystallized from the melt as small spherulites at temperatures below 185°C, and the melting point was centered at 225°C. The phase behavior and morphological texture in the blends were influenced by the LCP-b-PBT content.

For the blends with LCP-b-PBT content lower than 10%, birefringence could be observed below 240°C while cooling from the melt, but formation of the mesophase, was not clearly detected during the cooling. The cold crystallization of this low LCP-b-PBT content blend showed characteristics similar to those found in pure PBT.

In the blends containing LCP-b-PBT content higher than 10%, obvious mesophase characteristics were revealed and no macrophase separation between the components at around 255°C, which is used for processing, was observed under a polarized optical microscope. In the mesophase range (230°C-275°C), the birefringence indicated uniformly dispersed LCP-b-PBT in a PBT matrix.

### Thermal Properties

DSC thermograms of the LCP-b-PBT and the pure PBT were taken. The parameters determined from the thermograms are given in Table 1, above. The crystal to nematic transition for the LCP-b-PBT and isotropic melt for the PBT were 210°C and 225°C, respectively.

The cooling cycle thermogram showed a considerable supercooling of the mesophase to solid crystal transition.

The nematic nature of the LCP-b-PBT polymer was identified by a thread-like Schlieren texture observed by cross-polarized optical microscopy, as mentioned earlier. The biphasic region, mesophase and isotropic state, was observed at around 265°C, before partial isotropization commenced. The heat of isotropization of LCP-b-PBT in the blend was observed to decrease with increasing PBT content and eventually disappeared. Furthermore, there was a depression in the melting point of PBT with increasing blend composition.

Both the melting and isotropic transition of LCP-b-PBT in the blends with higher PBT content (90%) could not be detected. As mentioned earlier, there was no macrophase separation in the 250°C range, which is in the mesophase range of LCP-b-PBT and the melt state of PBT.

There may be some level of partial miscibility to make a PBT-rich phase between these two polymers in the blends with lower LCP-b-PBT content. The inference on the partial miscibility between these inclusion and matrix is considered reasonable because of the identical chemical structures of PBT block in LCP-b-PBT and pure PBT matrix. To make sure if the use of elevated temperatures in the processing period could lead to a significant change in phase behavior, the blends with 50/50, LCP-b-PBT/PBT were annealed at 260°C which was just above the processing temperature employed in this work, and at 300°C which is in the completely isotropic range.

There was no significant change on melting transition (Tₘ) of the samples annealed at 260°C even though the isotropic endotherms were somewhat reduced, (probably due to the partial miscibility). There may be no chemical reactions such as an ester-exchange reaction, or thermal degradation at this temperature. In contrast, on the annealing at 300°C the Tₘ of the blend shifts from 225°C for as-blended sample to 189°C for annealed for 90 minutes.

The isotropic endotherm disappeared from after annealing for 1 minute. It is believed that the shift in the Tₘ and the lack of an isotropic endotherm in the blend annealed at 300°C, were associated with a certain amount of transesterification reaction between LCP-b-PBT and PBT.

Kimura et. al., J. Polym. Sci., Polym. Phys. Ed., 21, 367 (1983) also observed similar melting point shifts in PET/PC blends and reported that changes in melting (Tₘ) as well as glass transition temperature (Tg) are useful indices of transesterification reaction. However, in the range of temperature and time scale employed for extrusion in the present work, there was no evidence for transesterification or any thermal degradation.

### Morphology

The pure LCP-b-PBT fiber fracture surfaces were also imaged by SEM. The fiber was extruded through a die of a capillary rheometer. Unfortunately, extruded strand of pure LCP-b-PBT with draw ratios over 1 could not be obtained because of the fibers brittle behavior. It was not clear whether the brittleness of the LCP-b-PBT fiber was due to the molecular weight, which is not high (IV = 0.51), or was due to its real intrinsic property. It is well known that LCPs are easily oriented and elongated as microfibrils and ribbons (G. Kiss, Polym. Eng. Sci., 27, 410 (1987)).

Many micron size spherical particles, which appear as nematic droplets of LCP-b-PBT, were observed as inclusions in PBT. The spherical particle shape was understandable since the semirigid-rod geometry of the TR-4 segments caused them to align side by side in elongated LCP-b-PBT domains.

Heat treatment of an undrawn LCP-b-PBT strand at 150°C for ten hours showed more elongated and bigger domain morphology.

Fracture surfaces of pure PBT fibers, spun through the die of the capillary rheometer, did not show any particular morphological features. The blends clearly showed a distinct two-phase morphological texture where the dispersed phase represented the LCP-b-PBT domains embedded in the PBT matrix. SEM micrographs of the fractured cross sections of the fibers containing 5% to 50% LCP-b-PBT extruded at 245°C or 255°C with various draw ratios were also taken. In all blends, the LCP-b-PBT domains were ultrafinely and uniformly dispersed and from 0.05 µm to 0.1 µm in size. These data suggest that the LCP-b-PBT was not miscible with the PBT but that the adhesion of the LCP-b-PBT domains to the matrix was excellent. It seemed that the undrawn fibers spun at 245°C had somewhat poorly oriented morphology, while those spun at 255°C consisted of well oriented smooth fibrils. Well developed fibrils could not be observed in this blend system except at higher draw ratio. However, even in the fibers with higher draw ratios, well developed fibrillation did not occur when compared to similar LCP blends reported by other investigators (Shin et al., Polym. Eng. Sci., 30, 13 (1990)). In the blend of 10% LCP-b-PBT content, for example, small droplets of LCP-b-PBT were initially dispersed with slight deformation.

It is well known that fibril formation of polymer particles depends mainly on the entrance flow in a die, the interfacial tension and the initial size of the particles. A possible explanation for the lack of fibrillation in the present blend system was that ultrafine dispersion of LCP-b-PBT in the PBT matrix made coalescence of the small spherical particles difficult. Without coalescence the surface energy of the smaller droplets was too high for deformation to occur, especially in a blend system with high adhesion force between the components.

Another reason for poor fibril formation in these LCP-b-PBT/PBT blends can be inferred in terms of miscibility. As mentioned earlier, there may be partial miscibility between the PBT block in the LCP-b-PBT and the PBT matrix to form a PBT-rich phase. This PBT-rich phase may influence the viscosity of the blend and consequently made generation of fibrils difficult.

Brizard et al., Polym. Eng. Sci., 27, 653 (1987), have observed similar lack of fibrillation in blends of a liquid crystalline copolyester of p-hydroxybenzoic acid/poly(ethylene terephthalate) with nylon 6,6 and polycarbonate due to this effect.

It was also observed that there were no long microfibers in the blends with 10% LCP-b-PBT content extruded at draw ratios of 40 or less. However, a SEM micrograph for the blend of 20% LCP-b-PBT with a draw ratio of 40 clearly showed the presence of thin fibrils which seemed to dominate the morphology. These observations infer the importance of blend composition and draw ratio for the formation of a molecular composite.

### Mechanical Properties

Fibers of LCP-b-PBT/PBT blend and pure PBT were spun at 245°C and 255°C with various draw ratios via the extrusion procedure described previously.

In Table 2, the value of the strength (σ) and initial modulus (Eₒ) of the blend fibers were enhanced remarkably with increasing draw ratio. However, as expected in the case of a flexible coil polymer, the increase of σ and Eₒ with draw ratio was small for pure PBT:

**Table 2**

| Tensile properties of LCP-b-PBT/PBT extrudates | | | | | |
|---|---|---|---|---|---|
| LCP-b-PBT content (%) | draw ratio | ultimate strength (MPa) | | initial modulus (GPa) | |
| | | extrusion temp. | | extrusion temp. | |
| | | 245°C | 255°C | 245°C | 255°C |
| 0 | 1 | 51 | 53 | 1.94 | 1.92 |
| | 10 | 51 | 54 | 2.08 | 2.01 |
| | 20 | 57 | 59 | 2.15 | 2.15 |
| | 40 | 59 | 60 | 2.28 | 2.25 |
| | | | | | |
| 5 | 1 | 54 | 54 | 2.50 | 2.61 |
| | 10 | 59 | 61 | 2.85 | 3.02 |
| | 20 | 62 | 64 | 3.14 | 3.18 |
| | 40 | 63 | 66 | 3.30 | 3.48 |
| | | | | | |
| 10 | 1 | 55 | 58 | 2.80 | 2.95 |
| | 10 | 64 | 68 | 4.20 | 4.95 |
| | 20 | 70 | 76 | 8.01 | 8.50 |
| | 40 | 81 | 89 | 8.34 | 9.52 |
| | | | | | |
| 20 | 1 | 58 | 60 | 3.21 | 3.34 |
| | 10 | 69 | 75 | 6.99 | 7.48 |
| | 20 | 90 | 114 | 12.01 | 13.81 |
| | 40 | 104 | 120 | 13.01 | 14.23 |

The values of the σ versus the LCP-b-PBT content were also compared. The tensile strength of the 245°C extruded materials increased from 59 MPa for the PBT fiber with a draw ratio of 40 to 104 MPa for the 20% LCP-b-PBT fiber with the same draw ratio. For the 255°C extrusion, σ was improved from 60 MPa for PBT to 120 MPa for 20% LCP-b-PBT fiber with the same draw ratio of 40. The values were about twice that for pure PBT.

The following Table shows the LCP-b-PBT composition dependence of tensile strength (MPa) of the blend fibers spun at 245°C for a draw ratio of 1, 10, 20, and 40:

| LCP-b-PBT Content (%) | --- Tensile Str. (MPa) at Draw Ratio of -- | | | |
|---|---|---|---|---|
| | 1 | 10 | 20 | 40 |
| 0 | 51 | 51 | 57 | 59 |
| 5 | 54 | 59 | 62 | 63 |
| 10 | 55 | 64 | 70 | 81 |
| 20 | 58 | 69 | 90 | 104 |

This Table shows the same data as presented immediately above when the fibers were spun at 255°C rather than 245°C.

| LCP-b-PBT Content (%) | --- Tensile Str. (MPa) at Draw Ratio of -- | | | |
|---|---|---|---|---|
| | 1 | 10 | 20 | 40 |
| 0 | 53 | 54 | 59 | 60 |
| 5 | 54 | 61 | 64 | 66 |
| 10 | 58 | 68 | 76 | 89 |
| 20 | 60 | 75 | 114 | 120 |

When the initial moduli were plotted, the highest Eₒ values for 20% LCP-b-PBT fibers extruded at 245°C and 255°C, respectively, were 13.0 GPa and 14.2 GPa which are about 6 to 7 times higher than for pure PBT.

The following Table shows the LCP-b-PBT composition dependence of modulus of the blend fibers spun at 245°C for draw ratios of 1, 10, 20, and 40, respectively.

| LCP-b-PBT Content (%) | -- Modulus (GPa) at Draw Ratio of -- | | | |
|---|---|---|---|---|
| | 1 | 10 | 20 | 40 |
| 0 | 1.94 | 2.08 | 2.15 | 2.28 |
| 5 | 2.50 | 2.85 | 3.14 | 3.30 |
| 10 | 2.80 | 4.20 | 8.01 | 8.34 |
| 20 | 3.21 | 6.99 | 12.01 | 13.01 |

The following Table illustrates analogous data to that given above when the fibers were spun at 255°C, rather than 245°C:

| LCP-b-PBT Content (%) | -- Modulus (GPa) at Draw Ratio of -- | | | |
|---|---|---|---|---|
| | 1 | 10 | 20 | 40 |
| 0 | 1.92 | 2.01 | 2.15 | 2.25 |
| 5 | 2.61 | 3.02 | 3.18 | 3.48 |
| 10 | 2.95 | 4.95 | 8.50 | 9.52 |
| 20 | 3.34 | 7.48 | 13.81 | 14.23 |

The σ and Eₒ values of fibers made at 255°C reached a plateau value as the draw ratio reached 20. In comparison, the strength of the blend fibers made at 245°C still tends to increase with increasing draw ratio:

The following Table shows the tensile strength (MPa) of LCP-b-PBT/PBT (20/80 w/w) blends versus draw ratio when extruded at 245°C and 255°C.

| Extrudate | -- Tensile Str. (MPa) at Draw Ratio of -- | | | |
|---|---|---|---|---|
| | 1 | 10 | 20 | 40 |
| 245°C | 58 | 69 | 90 | 104 |
| 255°C | 60 | 75 | 114 | 120 |

The following Table shows the modulus (GPa) of LCP-b-PBT/PBT (20/80 w/w) blends versus the draw ratio for extrudates at 245°C and 255°C, respectively.

| Extrudate | -- Modulus (GPa) at Draw Ratio of -- | | | |
|---|---|---|---|---|
| | 1 | 10 | 20 | 40 |
| 245°C | 3.21 | 6.99 | 12.01 | 13.01 |
| 255°C | 3.34 | 7.48 | 13.81 | 14.23 |

Temperature is an important factor in the formation of an oriented mesophase in TLCPs, and the mechanical properties of a fiber extruded through a capillary die may be affected by the extrusion temperature. Fibers made from blends of LCP-b-PBT and PBT generally have shown that tensile strength and initial modulus increase with processing temperature.

As shown by review of SEM micrographs, this enhancement in σ and Eₒ was with poor fibrillation. It is projected that if the processing conditions can be adjusted to give fibril formation with a high aspect ratio, the blend system could be highly improved in its mechanical properties.

### Conclusion

Several conclusions may be drawn from the study of blends of the type of liquid crystalline block copolymer of the present invention with poly(butylene terephthalate). In the blends with a LCP-b-PBT content greater than about 10%, liquid crystalline phases were revealed without significant macrophase separation in the range of the processing temperature. There was no significant thermal degradation or chemical reactions, such as a transesterification reaction, at this temperature. The LCP-b-PBT domains were 0.05 µm to 0.1 µm in size and uniformly well dispersed over the PBT matrix.

The LCP-b-PBT was not totally miscible with the matrix, but the adhesion between the two materials was excellent. The tensile strength of the 20% LCP-b-PBT blend fiber extruded at 255°C and DR = 40 was 120 MPa, which is more than two times that for pure PBT. The initial moduli for 20% LCP-b-PBT fibers extruded at 245°C and 255°C were 13.0 GPa and 14.2 GPa amounting to an increase of 6 to 7 times that for pure PBT. The mechanical properties of the fibers spun through a capillary die increased with draw ratio, processing temperature and LCP-b-PBT content.

## Claims

1. A main chain thermotropic liquid crystalline segmented block copolymer which has the following general formula:
-[[Rod]ₓ - [Coil]_{y}]ₚ -
wherein Rod is a rod block, Coil is a flexible coil block, x is the number of rod block repeats, y is the number of flexible coil block repeats, and p is the number of repeating units, and wherein the rod blocks contain a flexible spacer and the flexible coil blocks are selected from the group consisting of polyester and polyamide.

2. A segmented block copolymer as claimed in Claim 1 wherein the flexible coil polymer matrix and the flexible coil block is polyester.

3. A segmented block copolymer as claimed in Claim 2 wherein the polyester is poly(butylene terephthalate).

4. A segmented block copolymer as claimed in Claim 1 wherein the rod block comprises oxybenzoate and terephtalate units.

5. A segmented block copolymer as claimed in Claim 2 wherein the rod block comprises oxybenzoate and terephthalate units.

6. A segmented block copolymer as claimed in Claim 3 wherein the rod block comprises oxybenzoate and terephthalate units.

7. A segmented block copolymer as claimed in Claim 1 wherein the rod block comprises a triad aromatic ester mesogenic unit containing a flexible polyalkylene spacer in the main chain thereof.

8. A segmented block copolymer as claimed in Claim 7 wherein the polyalkylene spacer is from about 2 to about 10 carbon atoms in length.

9. A main chain thermotropic liquid crystalline segmented block copolymer according to any one of claims 1-8, which is especially adapted to be blended with a flexible coil polymer matrix, which comprises rod and flexible coil polymer blocks, the rod blocks containing a flexible spacer and the flexible coil blocks being selected from the group consisting of polyester and polyamide, the flexible coil blocks being selected to be substantially similar to the composition of the flexible coil polymer matrix.

## Patentansprüche

1. Thermotropes flüssigkristallines segmentiertes Hauptketten-Blockcopolymer der allgemeinen Formel
-[[Rod]ₓ - [Coil]_{y}]ₚ-
worin "Rod" ein Stabblock und "Coil" ein flexibler Knäuelblock ist, x die Anzahl der wiederkehrenden Stabblöcke, y die Anzahl der wiederkehrenden flexiblen Knäuelblöcke und p die Anzahl der wiederkehrenden Einheiten bedeutet und wobei die Stabblöcke einen flexiblen Abstandshalter besitzen und die flexiblen Knäuelblöcke gewählt sind aus der Gruppe bestehend aus Polyester und Polyamid.

2. Segmentiertes Blockcopolymer nach Anspruch 1, bei welchem die flexible Knäuelpolymermatrix und der flexible Knäuelblock Polyester ist.

3. Segmentiertes Blockcopolymer nach Anspruch 2, bei welchem der Polyester Poly(butylenterephthalat) ist.

4. Segmentiertes Blockcopolymer nach Anspruch 1, bei welchem der Stabblock Oxybenzoat- und Terephthalateinheiten enthält.

5. Segmentiertes Blockcopolymer nach Anspruch 2, bei welchem der Stabblock Oxybenzoat- und Terephthalateinheiten enthält.

6. Segmentiertes Blockcopolymer nach Anspruch 3, bei welchem der Stabblock Oxybenzoat- und Terephthalateinheiten enthält.

7. Segmentiertes Blockcopolymer nach Anspruch 1, bei welchem der Stabblock eine triadische mesogene aromatische Estereinheit aufweist, die in ihrer Hauptkette einen flexiblen Polyalkylen-Abstandshalter enthält.

8. Segmentiertes Blockcopolymer nach Anspruch 7, bei welchem das Polyalkylen-Abstandselement eine Länge von etwa 2 bis etwa 10 Kohlenstoffatomen aufweist.

9. Thermotropes flüssigkristallines segmentiertes Hauptketten-Blockcopolymer nach einem der Ansprüche 1 - 8, das besonders zur Vermischung mit einer Matrix aus flexiblem Knäuelpolymer geeignet ist, das Stab- und flexible Knäuelpolymerblöcke enthält, wobei die Stabblöcke einen flexiblen Abstandshalter enthalten und die flexiblen Knäuelblöcke gewählt sind aus der Gruppe bestehend aus Polyester und Polyamid, wobei die flexiblen Knäuelblöcke gewählt sind, um der Zusammensetzung der Matrix aus flexiblem Knäuelpolymer im wesentlichen ähnlich zu sein.

## Revendications

1. Un copolymère séquence segmenté cristal liquide thermotrope à chaîne principale qui répond à la formule générale suivante :
-[[Rod]ₓ - [Coil]_{y}]ₚ-
dans laquelle Rod représente une séquence en bâtonnet, Coil représente une séquence flexible enchevêtrée, x est le nombre de répétitions de la séquence en bâtonnet, y est le nombre de répétitions de la séquence flexible enchevêtrée et p est le nombre de motifs répétitifs, et dans lequel les séquences en bâtonnet contiennent un espaceur flexible et les séquences flexibles enchevêtrées sont choisies dans le groupe constitué par le polyester et polyamide.

2. Un copolymère séquence segmenté selon la revendication 1, dans lequel la matrice de polymère flexible enchevêtré et la séquence flexible est le polyester.

3. Un copolymère séquencé segmenté selon la revendication 2, dans lequel le polyester est le poly(butylène téréphtalate).

4. Un copolymère séquencé segmenté selon la revendication 1, dans lequel la séquence en bâtonnet comprend des motifs oxybenzoate et téréphtalate.

5. Un copolymère séquencé segmenté selon la revendication 2, dans lequel la séquence en bâtonnet comprend des motifs oxybenzoate et téréphatalate.

6. Un copolymère séquence segmenté selon la revendication 3, dans lequel la séquence en bâtonnet comprend des motifs oxybenzoate et téréphtalate.

7. Un copolymère séquencé segmenté selon la revendication 1, dans lequel la séquence en bâtonnet comprend un motif mésogène d'ester aromatique en triade contenant un espaceur flexible en polyalkylène dans sa chaîne principale.

8. Un copolymère séquencé segmenté selon la revendication 7, dans lequel l'espaceur en polyalkylène représente une longueur d'environ 2 à environ 10 atomes de carbone.

9. Un copolymère séquencé segmenté cristal liquide thermotrope à chaîne principale selon une quelconque des revendications 1 à 8, qui convient particulièrement pour être mélangé avec une matrice de polymère flexible enchevêtré, qui comprend des séquences de polymère en bâtonnet et flexibles enchevêtrées, les séquences en bâtonnet comportant un espaceur flexible et les séquences flexibles enchevêtrées étant choisies dans le groupe constitué par le polyester et polyamide, les séquences flexibles enchevêtrées étant choisies pour être pratiquement similaires à la composition de la matrice de polymère flexible enchevêtré.
